# EUROPEAN PATENT APPLICATION

(11) **EP 3 284 729 A1**
(43) Date of publication of application: **21.02.2018**
(21) Application number: 16841719.4
(22) Date of filing: 26.08.2016
(51) Int. Cl.: C03C 8/14, C09K 11/08, C09K 11/64

(54) **GLASS-COATED LIGHT-ACCUMULATING MATERIAL AND METHOD FOR PRODUCING GLASS-COATED LIGHT-ACCUMULATING MATERIAL**

(30) Priority: 28.08.2015 JP 2015168435
(71) Applicant: Koa Glass Co. Ltd., Tokyo 132-0035 (JP)
(72) Inventor: KOBAYASHI Yoshinao, Tokyo 132-0035 (JP); NEMOTO Kunihiko, Tokyo 132-0035 (JP)
(74) Representative: Pontet Allano & Associes
(86) International application number: PCT/JP2016/074991
(87) International publication number: WO 2017/038687

(57) **Abstract**

A glass-coated light-accumulating material having excellent water resistance and having excellent luminescence properties for a long time period, and an efficient method for producing such a glass-coated light-accumulating material are provided.

Disclosed are a glass-coated light-accumulating material formed by incorporating a metal aluminate salt as a light-accumulating material into a glass component including a zinc phosphate glass as a main component; and a method for producing such a glass-coated light-accumulating material, in which the zinc phosphate glass includes P₂O₅, ZnO, and R₂O (wherein R = Na or K) as main components, and the melting point of the zinc phosphate glass is adjusted to a value within the range of 600°C to 900°C.

## Description

### TECHNICAL FIELD

The present invention relates to a glass-coated light-accumulating material and a method for producing a glass-coated light-accumulating material.

More particularly, the invention relates to a glass-coated light-accumulating material having excellent water-resistance, also having relatively low hardness, and having excellent luminescence properties for a long time, and to an efficient method for producing such a glass-coated light-accumulating material.

### BACKGROUND ART

Light-accumulating bodies (hereinafter, may also be referred to as light-accumulating material) having a property of emitting residual light (phosphorescent light) for a predetermined even after stopping light irradiation, are conventionally known, and attempts have been made to promote an enhancement of visibility of traffic signs at night or indication marks in dark areas, by utilizing the luminescence characteristics of such light-accumulating materials.

More specifically, when such light-accumulating materials are used for delineators, traffic signs (retroreflective members) and the like, visibility for vehicle drivers during nighttime driving can be enhanced. Also, when such light-accumulating materials are used for aisle indicators or indication marks for exit and the like inside constructions such as inside buildings or inside ships, visibility in dark places can be enhanced to a large extent.

As one of such light-accumulating materials, alkaline earth metal aluminate-based compounds are known (see, for example, Patent Documents 1 to 4).

That is, Patent Document 1 discloses an inorganic artificial ceramic material having excellent light-accumulating properties and also having excellent mechanical strength, water resistance and the like.

More specifically, this material is an inorganic artificial ceramic material having light-accumulating fluorescence characteristics, characterized in that it is obtained by uniformly dispersing and incorporating a light-accumulating fluorescent substance formed from at least one metal aluminate salt represented by formula: MO-nAl₂O₃ (provided that M represents one kind of metal or two or more kinds of composite metals selected from the group consisting of magnesium, calcium, strontium, and barium) at a content of 3% to 50% by weight, into a borosilicate glass matrix containing SiO₂, B₂O₃, and an alkali metal oxide as main components.

Furthermore, Patent Document 2 discloses a glaze that is harmless to the human body and is capable of emitting light for a long time during nighttime.

More specifically, this is a glaze formed by mixing 100 parts by weight of lead-free frits (for example, SiO₂: 40 parts by weight, B₂O₃: 26 parts by weight, K₂O: 6 parts by weight, ZrO₃: 5 parts by weight, BaO: 5 parts by weight, Zr₂O: 5 parts by weight, Al₂O₃ : 3 parts by weight, Na₂O: 3 parts by weight, and La₂O: 2 parts by weight) with 3 to 50 parts by weight of an inorganic light-accumulating body or an organic light-accumulating body and 30 to 60 parts by weight of a binder.

Furthermore, Patent Document 3 discloses a ceramic color composition that exhibits predetermined light accumulation and also exhibits a decorative effect, by being applied on a glass material and baked.

More specifically, this is a ceramic color composition that emits light in dark places when applied on a glass material and baked at a temperature of 500°C to 700°C, the ceramic color composition being formed by mixing an inorganic mixed powder composed of (A) 20% to 70% by weight of a low-melting point glass powder; (B) 30 to 60% by weight of a light-accumulating pigment; and (C) 0% to 20% by weight of an inorganic pigment, with an organic vehicle at a proportion of 0% to 30% by weight of the mixed powder.

Furthermore, Patent Document 4 discloses a fluorescent glaze that is suitable for providing fluorescent muffle painting on the surface of products such as chinaware, glass, and vitreous enamel.

More specifically, this is a fluorescent glaze including 100 parts by weight of an oxide-based fluorescent substance having an average particle size of 10 µm or less, and 5 to 300 parts by weight of low-melting point glass having a lead content of 10% by weight or less.

### CITATION LIST

### PATENT DOCUMENT

Patent Document 1: JP 3311254 B (Claims)
Patent Document 2: JP 8-165140 A (Claims)
Patent Document 3: JP 9-142882 A (Claims)
Patent Document 4: JP 4-38700 B (Claims)

### DISCLOSURE OF THE INVENTION

### PROBLEM TO BE SOLVED BY THE INVENTION

However, regarding the inorganic artificial ceramic material disclosed in Patent Document 1, it is necessary to vitrify a borosilicate glass material in advance by heating at a temperature of 1,300°C or higher, and then mix the resultant with a light-accumulating fluorescent substance. Therefore, there has been a problem that the light-accumulating fluorescent substance is thermally degraded, the production process becomes complicated, or the borosilicate glass material is colored so that the visible light transmittance becomes markedly low.

There has also been a problem that the surface hardness of the borosilicate glass material is relatively high, and when mixed with and dispersed in a resin or the like, the borosilicate glass material is likely to damage a mixing apparatus such as a propeller.

More specifically, the surface hardness of the borosilicate glass material has, for example, a value of 5 or higher as Mohs' hardness, and according to a commercially available Vickers hardness meter (manufactured by Akashi Seisakusho, Ltd., MVK-H1), the surface hardness has a value of 640 kgf/mm² or higher.

Furthermore, there has been a problem that even in a case in which the periphery of a light-accumulating fluorescent substance is coated using a borosilicate glass material, water resistance is not enhanced, and the emission luminance or the duration of emission is likely to decrease significantly compared to the case of the simple substances of light-accumulating fluorescent substances.

The glaze disclosed in Patent Document 2 is characterized in that the glaze is produced by mixing predetermined lead-free frits with a predetermined amount of an inorganic fluorescent substance or an organic fluorescent substance and a binder. However, since the characteristics of the lead-free frits are not optimized, there has been a problem that even when a light-accumulating fluorescent substance is coated with the glaze, water resistance is not enhanced.

Furthermore, there has been a problem that the emission luminance or the duration of emission is likely to decrease in contrast, compared to the case of the simple substances of light-accumulating fluorescent substances.

The ceramic color composition disclosed in Patent Document 3 uses lead glass (PbO: 51% by weight, SiO₂: 34% by weight, B₂O₃: 4.8% by weight, Na₂O: 4.2% by weight, ZrO₂: 4% by weight, and TiO₂: 2% by weight), bismuth borosilicate glass or the like as the (A) low-melting point glass powder, there has been a problem in view of safety or cost.

Furthermore, even when the ceramic color composition is coated with a lead glass material or the like, water resistance of the light-accumulating fluorescent substance is not enhanced, and also, since the visible light transmittance of the lead glass material or the like is low, there has been a problem that the emission luminance or the duration of emission is low from the early stage, compared to the case of the simple substances of light-accumulating fluorescent substances.

In addition, the fluorescent glaze disclosed in Patent Document 4 also uses, for example, borosilicate glass having SiO₂: 40.5% by weight, Na₂O: 11% by weight, Al₂O₃: 7% by weight, B₂O₃: 25% by weight, ZnO: 2.5% by weight, K₂O: 5% by weight, and PbO: 9% by weight, or the like as the low-melting point glass. Thus, there has been a problem in view of safety or cost.

Even when the fluorescent glaze is coated with a borosilicate glass or the like, water resistance of the light-accumulating fluorescent substance is not enhanced, and also, since the visible light transmittance of the borosilicate glass or the like is low, there has been a problem that the emission luminance or the duration of emission is low from the early stage, compared to the case of the simple substances of light-accumulating fluorescent substances.

Thus, the inventors of the invention conducted a thorough investigation on such problems, and the inventors found that when a predetermined light-accumulating material (may be referred to as photoluminescent material; hereinafter, the same) is used as a filler material, and a predetermined zinc phosphate glass is used as a matrix material for the filler material, the hardness may be controlled to a value within a predetermined range, and also, the product exhibits excellent water resistance and luminescence characteristics. Thus, the inventors completed the invention.

That is, according to the invention, it is an object of the invention to provide a glass-coated light-accumulating material which has excellent water resistance or luminescence characteristics, and in which the surface hardness may be controlled to a predetermined range, and an efficient method for producing such a glass-coated light-accumulating material.

### MEANS FOR SOLVING PROBLEM

According to the invention, there is provided a glass-coated light-accumulating material obtained by incorporating a metal aluminate salt as a light-accumulating material into a glass component including zinc phosphate glass as a main component, in which the zinc phosphate glass includes P₂O₅, ZnO, and R₂O (wherein R = Na or K) as main components, and the melting point of the zinc phosphate glass is adjusted to a value within the range of 600°C to 900°C. Thus, the problems described above may be solved.

That is, when the periphery of a predetermined light-accumulating material is glass-coated using such a zinc phosphate glass, the coefficient of water absorption is lowered, and water resistance is enhanced. Also, the emission luminance or the duration of emission may also be enhanced compared to the case of the simple substance of the light-accumulating material.

That is, when a zinc phosphate glass having a predetermined melting point is used, a light-accumulating material may be relatively uniformly mixed and dispersed therein at a low melting point, and when the dispersion product is heated as received to a predetermined temperature, a glass-coated light-accumulating material formed by incorporating a metal aluminate salt as a light-accumulating material into a glass component including zinc phosphate glass as a main component may be obtained.

Furthermore, since the surface hardness of the zinc phosphate glass may be controlled to an appropriate value, when the light-accumulating material is mixed and dispersed in a resin or the like using a mixing apparatus, the risk of damaging such a mixing apparatus is reduced.

In addition, when a glass-coated light-accumulating material that is glass-coated with a zinc phosphate glass is used, it is possible to mold the glass-coated light-accumulating material into various forms or to pulverize the material, and the scopes for the applications in which the glass-coated light-accumulating material may be used, or the production method may be expanded.

According to the invention, the zinc phosphate glass is a matrix (parent material) for uniformly mixing and dispersing a light-accumulating material; however, in some cases, even such a parent material may be referred to as a coating material for a light-accumulating material.

On the occasion of configuring the glass-coated light-accumulating material of the invention, it is preferable that the content of P₂O₅ has a value within the range of 40% to 60% by weight, the content of ZnO has a value within the range of 25% to 39% by weight, and the content of R₂O has a value within the range of 1% to 15% by weight, with respect to the total amount (100% by weight) of the mixing composition of the zinc phosphate glass.

When such a mixing ratio is used, handling of the glass-coated light-accumulating material as a glass raw material becomes easy, and uniform mixing and dispersing of the zinc phosphate glass and the light-accumulating material becomes easier.

Furthermore, in regard to the glass-coated light-accumulating material thus obtained, water resistance of the light-accumulating material may be enhanced, and the emission luminance or the duration of emission may also be further enhanced.

When a zinc phosphate glass having such a mixing composition is used, the surface hardness may be adjusted to an appropriate range, and moreover, the influence of the surface hardness of the light-accumulating material may be mitigated.

On the occasion of configuring the glass-coated light-accumulating material of the invention, it is preferable that the metal aluminate salt is in the form of particles of a light-accumulating material formed from at least one metal aluminate salt represented by formula: MO-nAl₂O₃ (wherein M represents at least one metal selected from the group consisting of magnesium, calcium, strontium, and barium).

When such a light-accumulating material is used, handling becomes easy, and uniform mixing and dispersing of the zinc phosphate glass and the light-accumulating material becomes easier. Also, in regard to the glass-coated light-accumulating material thus obtained, water resistance, and an increase in the emission luminance or the duration of emission of the light-accumulating material may be expected.

On the occasion of configuring the glass-coated light-accumulating material of the invention, it is preferable that the amount of incorporation of the metal aluminate salt is adjusted to a value within the range of 1 to 60 parts by weight with respect to 100 parts by weight of the zinc phosphate glass.

When such a mixing ratio is employed, handling as a mixture becomes easy, and uniform mixing and dispersing of the zinc phosphate glass and the light-accumulating material becomes easier.

Furthermore, in regard to the glass-coated light-accumulating material thus obtained, water resistance of the light-accumulating material is enhanced, and the emission luminance or the duration of emission is also further enhanced. Moreover, the surface hardness may be adjusted to an appropriate range.

In a case in which the metal aluminate salt has been used to configure a predetermined light-accumulating material (a commercially available product or the like) by being mixed with a predetermined mixed with an activating agent, a co-activating agent and the like, such a predetermined light-accumulating material may be identified with the metal aluminate salt.

Therefore, as long as equivalent effects may be obtained, the amount of incorporation of the predetermined light-accumulating material may be regarded as the amount of incorporation of the metal aluminate salt.

On the occasion of configuring the glass-coated light-accumulating material of the invention, it is preferable that the overall shape is a particulate shape, and the average particle size has a value within the range of 1 to a value of below 500 µm.

When the glass-coated light-accumulating material has such a form, the glass-coated light-accumulating material may be uniformly mixed and dispersed into various resins, inorganic materials and the like, and furthermore, the glass-coated light-accumulating material may be widely applied as an indirect emitting type glass-coated light-accumulating material.

On the occasion of configuring the glass-coated light-accumulating material of the invention, it is preferable that the overall shape is a granular shape or a flat plate shape, and the maximum diameter has a value within the range of 0.5 to 30 mm.

When the glass-coated light-accumulating material has such a form, the glass-coated light-accumulating material may be widely applied as a direct emitting type glass-coated light-accumulating material by being brought into direct contact with, or being partially embedded in, various resins, liquid materials or inorganic materials.

On the occasion of configuring the glass-coated light-accumulating material of the invention, it is preferable that a silicon compound-containing layer is provided as a moisture adjusting layer on the surface of the metal aluminate salt or on the surface of the glass-coated light-accumulating material.

When the glass-coated light-accumulating material is configured as such, hydrolysis or the like occurring during the production of the glass-coated light-accumulating material may be suppressed, and also, the glass-coated light-accumulating material may be produced into a glass-coated light-accumulating material having satisfactory water resistance or luminescence characteristics.

According to another embodiment of the invention, there is provided a method for producing a glass-coated light-accumulating material formed by incorporating a metal aluminate salt as a light-accumulating material into a glass component including a zinc phosphate glass as a main component, in which the glass component includes P₂O₅, ZnO, and R₂O (wherein R = Na or K) as main components, a zinc phosphate glass having a melting point value within the range of 600°C to 900°C is used, a metal aluminate salt is used as a light-accumulating material, and the method includes the following steps (1) to (3):
(1) a step of heating a mixture including a metal aluminate salt and a zinc phosphate glass raw material to a temperature of 600°C to 900°C and thereby obtaining a molten product;
(2) a step of cooling the molten product thus obtained in water and also pulverizing the cooled molten product; and
(3) a step of classifying the pulverization product thus obtained, and obtaining a glass-coated light-accumulating material having a desired average particle size.

When such a method for producing a glass-coated light-accumulating material is used, uniform mixing and dispersing with a light-accumulating material may be achieved still in a powdered form. Also, when the material is heated as received to a predetermined temperature, a glass-coated light-accumulating material formed by incorporating a metal aluminate salt as a light-accumulating material into a glass component including a zinc phosphate glass as a main component, may be produced efficiently.

With the glass-coated light-accumulating material thus obtained, water resistance is enhanced by the predetermined coating material, and the emission luminance or the duration of emission may also be enhanced compared to the case of the simple substance of the light-accumulating material.

Furthermore, when the glass-coated light-accumulating material thus obtained is used, since the hardness of the zinc phosphate glass may be adjusted to an appropriate range, the influence of hardness of the light-accumulating material may be mitigated, and moreover, the glass-coated light-accumulating material may be easily mixed and dispersed into resins using various mixing apparatuses.

### BRIEF DESCRIPTION OF DRAWINGS

Fig. 1 is a diagram (photograph, magnification ratio: 300) provided in order to describe the state of aggregation of the light-accumulating material in a glass-coated light-accumulating material;
Fig. 2 is a conceptual diagram (magnification ratio: 1500) provided to describe a moisture adjusting layer provided on the periphery of a light-accumulating material that is included in a glass-coated light-accumulating material;
Fig. 3 is a diagram (photograph, magnification ratio: 10 times) showing the external appearance of a light-accumulating body;
Fig. 4 is a diagram provided to describe the changes over time in the emission luminance of a glass-coated light-accumulating material (corresponding to Example 3);
Fig. 5 is a diagram provided to describe the changes over time in the emission luminance of glass-coated light-accumulating materials (corresponding to Examples 7 and 8);
Fig. 6 is a diagram (photograph, magnification ratio: 10 times) provided to describe a particulate glass-coated light-accumulating material (Example 7);
Fig. 7 is a diagram (photograph, magnification ratio: 10 times) provided to describe a tablet-shaped glass-coated light-accumulating material (Example 8); and
Fig. 8 is a diagram provided to describe a production process for a glass-coated light-accumulating material.

### BEST MODE(S) FOR CARRYING OUT THE INVENTION

### [First embodiment]

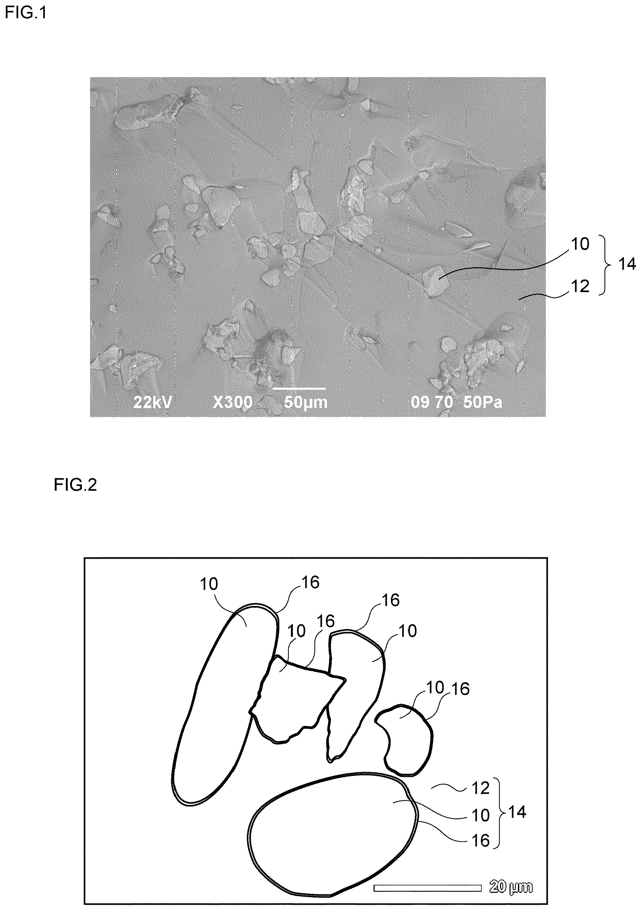

A first embodiment relates to, as shown in Fig. 1 or Fig. 2, a glass-coated light-accumulating material 14 formed by incorporating a metal aluminate salt as a light-accumulating material 10 into a glass component including a zinc phosphate glass 12 as a main component, in which the zinc phosphate glass 12 includes P₂O₅, ZnO, and R₂O (R = Na or K) as main components, and the melting point of the zinc phosphate glass 12 is adjusted to a value within the range of 600°C to 900°C.

Here, Fig. 1 shows a predetermined cross-section of a glass-coated light-accumulating material 14 basically composed of a light-accumulating material 10 as a filler material and a zinc phosphate glass as a coating material 12.

Fig. 2 shows a predetermined cross-section of a glass-coated light-accumulating material 14 provided with a moisture adjusting layer 16 between a light-accumulating material 10 as a filler material and a coating material 12.

Hereinafter, the glass-coated light-accumulating material 14 shown in Fig. 1 or Fig. 2 will be mentioned as appropriate, and the glass-coated light-accumulating material 14 will be specifically described.

### 1. Light-accumulating material

### (1) Main components

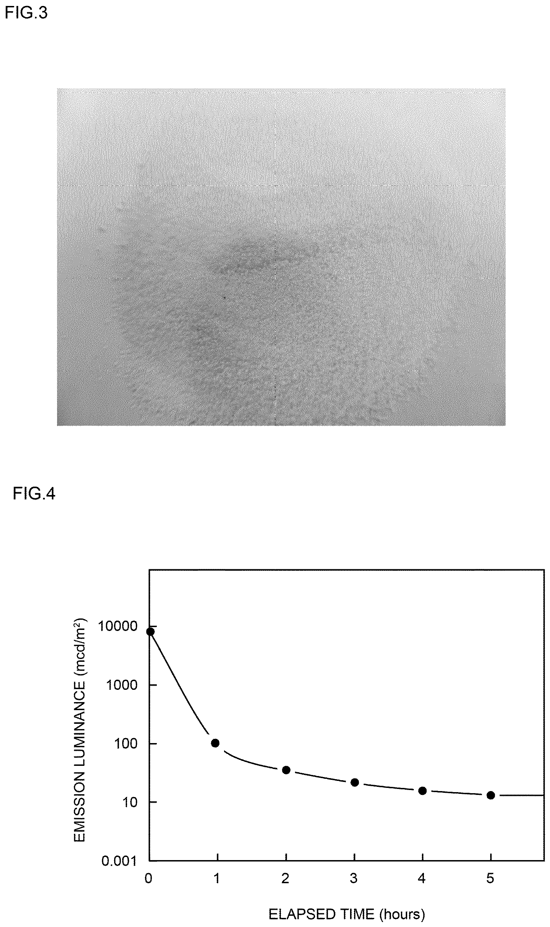

As the light-accumulating material (may be referred to as photoluminescent material) as a filler material shown in Fig. 3 (photograph), a predetermined aluminate including at least one material represented by formula: MO-nAl₂O₃ (wherein M represents one kind of metal or two or more kinds of composite metals selected from the group consisting of magnesium, calcium, strontium, and barium) as a main component, is employed.

Therefore, specific examples of such a light-accumulating material include BaMg₂Al₁₆O₂₇, Sr₄Al₁₄O₂₅, SrAl₂O₂, SrAl₂O₄, and SrAl₈O₂.

Furthermore, n in the formula represents the molar ratio between the alkaline earth metal oxide (MO) and alumina (Al₂O₃). n is usually a number in the range of 1 to 20, and more preferably a number in the range of 3 to 15.

Since the light-accumulating material used in the invention is heated to about 600°C to 900°C, it is preferable that the light-accumulating material has predetermined heat resistance. That is, it is preferable that even in a case in which the coating material is melted at a predetermined temperature, and the light-accumulating material is heated at the time of uniformly mixing the light-accumulating material with the molten coating material, the light-accumulating material maintains predetermined luminescence characteristics without being thermally degraded.

### (2) Activating agent and co-activating agent

It is also preferable that an activating agent or a co-activating agent is incorporated into the aluminate as a light-accumulating material.

That is, it is because in a light-accumulating material having an activating agent or a co-activating agent added thereto, the luminescence characteristics such as the emission luminance and luminescence wavelength, stability at high temperature, and light resistance are further improved.

Here, as a suitable activating agent, specifically, at least one of europium, europium-manganese and the like may be mentioned.

It is preferable that the amount of incorporation of such an activating agent is adjusted to a value within the range of 0.001 mol% to 10 mol%, more preferably to a value within the range of 0.01 mol% to 1 mol%, and even more preferably to a value within the range of 0.05 mol% to 0.5 mol%, with respect to the alkaline earth metal element.

Suitable examples of the co-activating agent may be at least one or more elements selected from the group consisting of lanthanoid series elements such as lanthanum, cerium, praseodymium, neodymium, samarium, gadolinium, terbium, dysprosium, holmium, erbium, thulium, ytterbium, and lutetium; manganese, tin, and bismuth.

In regard to the amount of addition of the co-activating agent, usually, the amount of addition is preferably adjusted to a value within the range of 0.001 mol% to 10 mol%, more preferably to a value within the range of 0.01 mol% to 5 mol%, and even more preferably to a value within the range of 0.1 mol% to 0.5 mol%, with respect to 1 mol% of the alkaline earth metal element, which is a constituent element of the light-accumulating fluorescent component.

### (3) Average particle size

Furthermore, the average particle size of the light-accumulating material formed from an aluminate may be appropriately determined according to the application; however, it is usually preferable to adjust the average particle size to a value within the range of 0.1 to 300 µm.

The reason for this is that if the average particle size of the light-accumulating material has a value of below 0.1 µm, it may be difficult to uniformly disperse the light-accumulating material with the zinc phosphate glass, or luminescence characteristics may be partially deteriorated.

On the other hand, it is because if the average particle size of the light-accumulating material is above 300 µm, similarly, it is difficult to uniformly disperse the light-accumulating material with the zinc phosphate glass, or the average particle size of the glass-coated light-accumulating material that is finally obtained may become excessively large.

Therefore, it is more preferable to adjust the average particle size of the light-accumulating material to a value within the range of 1 to 250 µm, and even more preferably to a value within the range of 10 to 100 µm.

The average particle size of the light-accumulating material may be calculated according to JIS Z 8901 respectively by actual measurement with an electron microscope or by an image processing method (hereinafter, the same).

### (4) Surface treatment

Furthermore, it is preferable to perform a surface treatment on the periphery of the light-accumulating material for the purpose of enhancing water resistance or the like.

That is, it is preferable to perform a predetermined surface treatment, and to form, for example, a silica layer or a metal layer as a moisture adjusting layer.

That is, it is preferable that a moisture adjusting layer exhibiting a moisture-proof effect is formed, and a polysilazane film or a silica film (including a silicating flame-treated film) having a thickness of 0.1 nm to 1,000 µm is formed, or a metal layer formed from aluminum, nickel or the like (including a vapor deposited layer or a plating layer) having the same thickness is provided.

Particularly, if a polysilazane film or a silicating flame-treated film is used, even with a thin film having a thickness of 0.1 nm to 100 nm is used, a value of low water vapor transmittance, for example, a value of 0.1 g/(m²·day) or less as the water vapor transmittance (WVTR) is obtained under the conditions of 40°C and 90%RH. Thus, a polysilazane film or a silicating flame-treated film is suitable.

### 2. Zinc phosphate glass

### (1) Main component

The zinc phosphate glass contains P₂O₅, ZnO, and R₂O (wherein R = Na or K) as main components.

Namely, P₂O₅ has a function as a skeletal component of the zinc phosphate glass, that is, a network structure of glass.

ZnO has a function as a component that exhibits a flux effect for the zinc phosphate glass, increases meltability of the glass composition, and also decreases the coefficient of thermal expansion or enhances weather resistance.

Furthermore, R₂O (wherein R = Na or K) has a function as a component for ameliorating the fluidity of the zinc phosphate glass.

Therefore, when a zinc phosphate glass including these mixing components is used, handling as a glass raw material becomes easy, and uniform mixing and dispersing of the zinc phosphate glass and the light-accumulating material becomes easier.

Furthermore, in regard to the glass-coated light-accumulating material thus obtained, water resistance of the light-accumulating material is enhanced, and also, the emission luminance or the duration of emission may be further enhanced.

With a zinc phosphate glass formed from these mixing components, the surface hardness may be adjusted to an appropriate range, and moreover, the influence of the surface hardness of the light-accumulating material may also be mitigated.

Therefore, it is preferable that the amount of incorporation of P₂O₅ is adjusted to a value within the range of 40% to 60% by weight with respect to the total amount of the zinc phosphate glass (the total amount of P₂O₅, ZnO, and R₂O is designated as 100% by weight).

The reason for this is that if the amount of incorporation of P₂O₅ has a value of below 40% by weight, when the zinc phosphate glass is heated and melted, unmelted matter may easily occur, or it may be difficult to uniformly coat the light-accumulating material.

On the other hand, it is because if the amount of incorporation of P₂O₅ has a value of above 60% by weight, the zinc phosphate glass thus obtainable may become brittle.

Therefore, it is more preferable to adjust the amount of incorporation of P₂O₅ to a value within the range of 41% to 59% by weight, and even more preferably to a value within the range of 42% to 58% by weight, with respect to the total amount of the zinc phosphate glass.

In a case in which the total amount of such P₂O₅ and ZnO and R₂O that will be described below does not reach 100% by weight, the total amount may be adjusted to become 100% by weight by incorporating other glass components (hereinafter, the same).

Furthermore, it is preferable that the amount of incorporation of ZnO is adjusted to a value within the range of 25% to 39% by weight with respect to the total amount of the zinc phosphate glass (the total amount of P₂O₅, ZnO, and R₂O is designated as 100% by weight).

The reason for this is that if the amount of incorporation of ZnO has a value of below 25% by weight, the zinc phosphate glass thus obtainable may become brittle.

On the other hand, it is because if the amount of incorporation of ZnO has a value of above 39% by weight, when the zinc phosphate glass is heated and melted, unmelted matter may easily occur, or it may be difficult to uniformly coat the light-accumulating material.

Therefore, it is more preferable to adjust the amount of incorporation of ZnO to a value within the range of 26% to 38% by weight, and even more preferably to a value within the range of 27% to 37% by weight.

Furthermore, it is preferable that the amount of incorporation of R₂O is adjusted to a value within the range of 1% to 15% by weight with respect to the total amount of the zinc phosphate glass (the total amount of P₂O₅, ZnO, and R₂O is designated as 100% by weight).

The reason for this is that if the amount of incorporation of R₂O has a value of below 1% by weight, the zinc phosphate glass thus obtainable may not be vitrified.

On the other hand, it is because if the amount of incorporation of R₂O has a value of above 15% by weight, when the zinc phosphate glass is heated and melted, unmelted matter may easily occur, or it may be difficult to uniformly coat the light-accumulating material.

Therefore, it is more preferable to adjust the amount of incorporation of R₂O to a value within the range of 2% to 14% by weight, and even more preferably to a value within the range of 3% to 13% by weight, with respect to the total amount of the zinc phosphate glass.

Meanwhile, the amounts of incorporation of various components of the zinc phosphate glass (P₂O₅, ZnO, and R₂O, or the colorant and the like that will be described below) may be measured with high accuracy using, for example, a X-ray fluorescence analyzer, an atomic absorption spectrometer, or an ICP (Inductively Coupled Plasma) analyzer (hereinafter, the same).

### (2) Other glass components

As an optional component, it is also preferable to incorporate SiO₂ or Al₂O₃ as a component that forms the network structure of the zinc phosphate glass.

More specifically, it is preferable to adjust the amounts of incorporation of SiO₂ and Al₂O₃ respectively to a value within the range of 0.1% to 15% by weight with respect to the total amount of the zinc phosphate glass.

Similarly, as an optional component, it is also preferable to incorporate B₂O₃ as a component that exhibits a flux effect on the zinc phosphate glass and reduces viscosity of the glass composition at high temperature.

More specifically, although the amount of incorporation is smaller than the amount of incorporation of P₂O₅, it is preferable to adjust the amount of incorporation of B₂O₃ to a value within the range of 0.1% to 15% by weight with respect to the total amount of the zinc phosphate glass.

Similarly, as an optional component, it is preferable to incorporate CaO as a component that exhibits a function of reducing the viscosity of the zinc phosphate glass at high temperature.

More specifically, it is preferable to adjust the amount of incorporation of CaO to a value within the range of 0.1% to 15% by weight with respect to the total amount of the zinc phosphate glass.

Similarly, as an optional component, it is preferable to incorporate LiO₂, SO₃, and BaO as components for enhancing meltability of the zinc phosphate glass, moldability of the glass container thus obtainable, and the like, through addition of relatively small amounts.

More specifically, it is preferable to adjust the amounts of incorporation of LiO₂, SO₃, and BaO respectively to a value within the range of 0.1% to 15% by weight with respect to the total amount of the zinc phosphate glass.

Furthermore, similarly, as an optional component, it is also preferable to incorporate at least one metal oxide selected from the group consisting of Ag₂O, TiO₂, MgO, SrO, ZrO₂, Sb₂O₃, Cs₂O, SnO₂, and PbO, as mixing components of the zinc phosphate glass.

Particularly, antibacterial activity may be imparted by incorporating Ag₂O, and furthermore, the range of the use applications of the glass-coated light-accumulating material may be broadened.

In any case in which a predetermined metal oxide is incorporated, it is preferable to adjust the amount of incorporation of the metal oxide to a value within the range of 0.1% to 10% by weight, more preferably to a value within the range of 0.2% to 5% by weight, and even more preferably to a value within the range of 0.3% to 3% by weight, with respect to the total amount of the zinc phosphate glass.

### (3) Colorant

In addition to the oxide as the mixing components for the zinc phosphate glass, it is also preferable to incorporate a polyvalent oxide component comprising Co²⁺, Cu²⁺, Ni²⁺, Co³⁺, Mn³⁺, Nb³⁺, Pr³⁺, Er³⁺, Cr⁶⁺, Ta⁵⁺, W⁶⁺, Mo⁶⁺, or Ag⁺ as a colorant.

Therefore, it is preferable to adjust the respective amounts of incorporation of the glass components to a value within the range of 0.01% to 5% by weight with respect to the total amount of the zinc phosphate glass.

### (4) Impurities and the like

There are occasions in which the zinc phosphate glass contains heavy metal oxides or transition metals as impurities or unavoidable components; however, these components may have adverse effect on the action of the activating agent or co-activating agent that is contained in the light-accumulating material, and may consequently deteriorate the fluorescence characteristics of the light-accumulating material or induce discoloration.

Therefore, in regard to impurities or transition metals such as Fe, Cr, and Ni, it is preferable to adjust the total content thereof to a value within the range of 0% to 1.0% by weight, more preferably to a value within the range of 0.0001% to 0.1% by weight, and even more preferably to a value within the range of 0.001% to 0.01% by weight, with respect to the total amount of the zinc phosphate glass.

### (5) Melting point

The melting point (including the softening point; hereinafter, the same) of the zinc phosphate glass is adjusted to a value within the range of 600°C to 900°C.

The reason for this is that if the melting point of the zinc phosphate glass has a value of below 600°C, there are occasions in which the zinc phosphate glass may not be vitrified.

On the other hand, it is because if the melting point of the zinc phosphate glass has a value of above 900°C, there is a risk that the light-accumulating material formed from an aluminate as a filler material may be thermally decomposed.

Therefore, it is more preferable to adjust the melting point of the zinc phosphate glass to a value within the range of 610°C to 890°C, and even more preferably to a value within the range of 650°C to 850°C.

The melting point of the zinc phosphate glass may be measured using, for example, a thermal analysis apparatus (TG-DSC or TG-DTA).

### (6) Amount of incorporation

In regard to the amount of incorporation (may also be referred to as coating amount) of the zinc phosphate glass that becomes the matrix component, it is preferable that the amount of incorporation of the metal aluminate salt as a light-accumulating material has a value within the range of 1 to 60 parts by weight with respect to 100 parts by weight of the zinc phosphate glass.

The reason for this is that when such an amount of incorporation is employed, water resistance of the light-accumulating material in the glass-coated light-accumulating material thus obtained is enhanced, the emission luminance or the duration of emission is also further increased, and the surface hardness may be adjusted to an appropriate range.

Furthermore, it is because when such an amount of incorporation is employed, handling as a mixture becomes easy in relation to the melt viscosity or the like, and uniform mixing and dispersing of the zinc phosphate glass and the light-accumulating material becomes easier.

Therefore, in connection with the amount of incorporation of the zinc phosphate glass, it is more preferable that the amount of incorporation of the metal aluminate salt as a light-accumulating material has a value within the range of 1.5 to 50 parts by weight with respect to 100 parts by weight of the zinc phosphate glass, and it is even more preferable that the amount of incorporation of the metal aluminate salt as a light-accumulating material has a value within the range of 2 to 25 parts by weight, and still more preferably a value within the range of 5 to 20 parts by weight.

In a case in which the ease of production or handleability of the glass-coated light-accumulating material is considered more important, more specifically, in a case in which it is wished to convert the mixing components of the zinc phosphate glass into a uniform liquid substance having a low melt viscosity within a relatively short period of time while maintaining predetermined luminescence properties, it is preferable to adjust the amount of incorporation of the metal aluminate salt to a value within the range of 1 to 25 parts by weight with respect to 100 parts by weight of the zinc phosphate glass.

That is, by reducing the amount of incorporation of the metal aluminate salt to a relatively smaller amount as such, for example, the mixing components of the zinc phosphate glass may be uniformly mixed even within a time period shorter than one hour, and a liquid substance having a low melt viscosity of 1×10⁶ Pa·sec or less (measurement temperature: 500°C) may be obtained. Thus, satisfactory handleability may be obtained.

Furthermore, as an example of the predetermined luminescence properties, even in a case in which the amount of incorporation of the metal aluminate salt is adjusted to 20% by weight, and the glass-coated light-accumulating material is pulverized into particles having an average particle size of 2 mm or less, an emission luminance of 5 mcd/m² or higher may be maintained for a time period of 8 hours or longer.

Meanwhile, when the moldability or the size of the glass-coated light-accumulating material, and the luminescence properties obtainable when the material is pulverized are considered more important, it is preferable to adjust the amount of incorporation of the metal aluminate salt to a value within the range of above 25 parts to 60 parts by weight with respect to 100 parts by weight of the zinc phosphate glass.

That is, by employing a relatively large amount of incorporation of the metal aluminate salt as such, for example, when the overall shape is a flat plate shape (tablet) or a granular shape having the maximum diameter of 3 mm or more, the light-accumulating material may be molded easily.

Furthermore, by employing a relatively large amount of incorporation of the metal aluminate salt as such, even in a case in which the glass-coated light-accumulating material is pulverized into fine particles having an average particle size of 0.1 to 200 µm, significant emission luminance may be obtained from the beginning, and this emission luminance may be maintained for a long time period.

More specifically, for instance, when the amount of incorporation of the metal aluminate salt is adjusted to 50% by weight, and the glass-coated light-accumulating material is pulverized into fine particles having an average particle size of 400 µm or less, an emission luminance of 5 mcd/m² or higher may be maintained for 8 hours or longer.

### (7) Transparency

In regard to transparency of the zinc phosphate glass, it is preferable to adjust the transmittance for visible light (for example, wavelength: 550 nm) with respect to the incident amount to a value within the range of 50% to 100%.

The reason for this is that if the visible light transmittance of the zinc phosphate glass has a value of below 50%, the luminescence characteristics may be markedly deteriorated.

Meanwhile, it is because if the visible light transmittance of the zinc phosphate glass is above 100%, the type of the raw material for the zinc phosphate glass that can be used may be excessively limited.

Therefore, it is more preferable to adjust the visible light transmittance of the zinc phosphate glass to a value within the range of 60% to 99%, and even more preferably to a value within the range of 70% to 98%.

The visibility transmittance of the zinc phosphate glass may be measured using a spectrophotometer.

### (8) Hardness

In regard to the hardness (surface hardness) of the zinc phosphate glass itself as the coating material, it is preferable that the Vickers hardness measured with a hardness meter (for example, manufactured by Akashi Seisakusho, Ltd., MVK-H1) is adjusted to a value of 600 kgf/mm² or less.

The reason for this is that such Vickers hardness is equivalent to about 5 as Mohs's hardness, and if the hardness is excessively high, the mixing apparatus may be damaged, uniform dispersing may be difficult, or the polish waste of the mixing apparatus may be incorporated, resulting in blackening of the resin or the like in which the zinc phosphate glass is dispersed.

However, if such Vickers hardness is excessively small, the mechanical strength obtainable when the glass-coated light-accumulating material has been produced may be markedly decreased.

Therefore, it is more preferable to adjust the hardness of the zinc phosphate glass to a value within the range of 10 to 500 kgf/mm², and even more preferably to a value within the range of 100 to 400 kgf/mm².

The hardness of the zinc phosphate glass itself as such a coating material may be measured by producing glass in a predetermined form; however, this hardness may be substantially identified with the surface hardness of the glass-coated light-accumulating material that will be mentioned below.

### 3. Luminescence characteristics 1

In regard to the luminescence characteristics of the glass-coated light-accumulating material, it is preferable that the emission luminance of phosphorescent light obtainable immediately after the glass-coated light-accumulating material is irradiated with solar light for 20 minutes, or after the glass-coated light-accumulating material is irradiated with halogen light under irradiation conditions equivalent thereto, is adjusted to a value of 50 mcd/m² or higher.

The reason for this is that since the emission luminance is markedly decreased over time, if the initial emission luminance is excessively low, it may be difficult to maintain a predetermined emission luminance for a long period of time such as one hour or longer.

It is also preferable that the emission luminance obtainable in the case of irradiating the glass-coated light-accumulating material with solar light, and then immediately the material is left to stand for one hour in a dark place, is adjusted to a value of 10 mcd/m² or higher.

The reason for this is that if such an emission luminance is obtained after an elapse of 1 hour after irradiation, the glass-coated light-accumulating material emits light for a predetermined time period even in nighttime use or the like, and the material may be sufficiently recognized.

Furthermore, it is preferable that the emission luminance obtainable in a case in which the glass-coated light-accumulating material is irradiated with solar light or the like and immediately left to stand for 3 hours in a dark place, is adjusted to a value of 5 mcd/m² or higher.

The reason for this is that if such an emission luminance is obtained in a case in which 3 hours have passed through after irradiation, the glass-coated light-accumulating material emits light for a longer period of time in nighttime use or the like, and accordingly, the range of use applications and the like may be significantly broadened.

### 4. Luminescence characteristics 2

In regard to the luminescence characteristics of the glass-coated light-accumulating material, it is preferable that immediately after the glass-coated light-accumulating material is irradiated with solar light for 20 minutes, or after the glass-coated light-accumulating material is irradiated with halogen light under irradiation conditions equivalent thereto, the glass-coated light-accumulating material sustains luminescence having a value of 5 mcd/m² or higher as the emission luminance of phosphorescent light, for one hour or longer; it is more preferable that the material sustains luminescence for 3 hours or longer; it is even more preferable that the material sustains luminescence for 5 hours or longer; and it is most preferable that the material sustains luminescence for 8 hours or longer.

The reason for this is that if the luminescence characteristics may be maintained for such a long time period, a wider expansion of the range of applications of the glass-coated light-accumulating material may be promoted.

If the emission luminance measured under the same conditions has a value of 10 mcd/m² or higher, the range of applications of the glass-coated light-accumulating material is further broadened, and if the emission luminance measured under the same conditions has a value of 50 mcd/m² or higher, there is an advantage that the glass-coated light-accumulating material may be used with ease even in an indoor environment, for which irradiation with solar light is fairly difficult.

Fig. 4 shows the changes over time in the emission luminance for the glass-coated light-accumulating material of the invention (corresponding to Example 3).

That is, the horizontal axis represents the elapsed time (hours), and the vertical axis represents the value of emission luminance expressed as a logarithmic value.

Therefore, regarding the emission luminance, it is understood that a significantly high value (for example, 9,000 mcd/m² or higher) is shown in the early stage, and this decreases with the lapse of time; however, with the glass-coated light-accumulating material, an emission luminance at a level of actual practical use such as 5 mcd/m² or higher is maintained even after the lapse of 5 hours or longer.

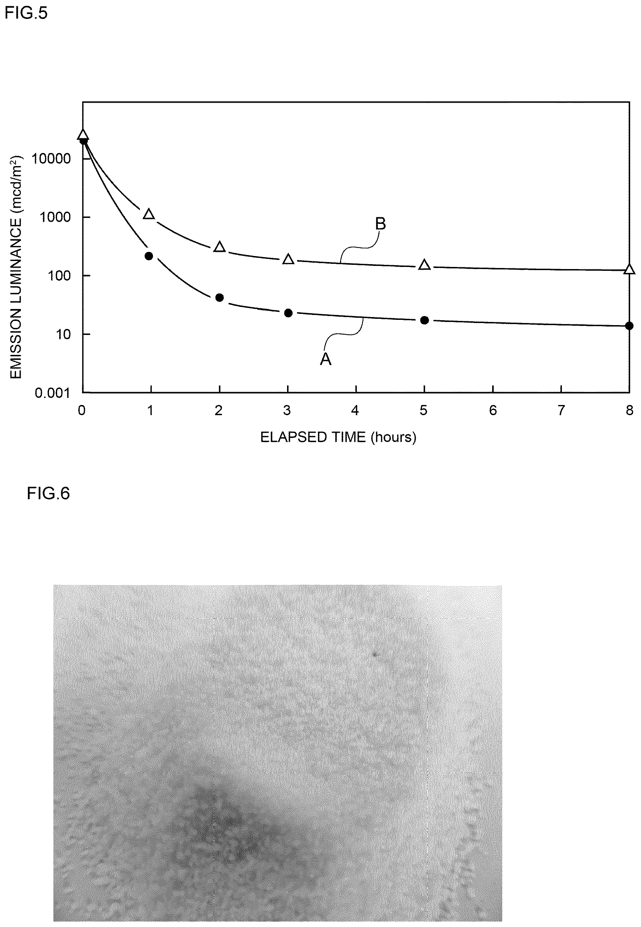

Furthermore, Fig. 5 shows changes over time in the emission luminance for the glass-coated light-accumulating materials of the invention (corresponding to Examples 7 and 8).

That is, in Examples 7 and 8, the amounts of incorporation of the light-accumulating body in the glass-coated light-accumulating material are respectively 50% by weight with respect to the total amount.

However, Example 7 has an external appearance that is in a particulate form as shown in Fig. 6 (photograph), and the average particle size is 0.4 mm.

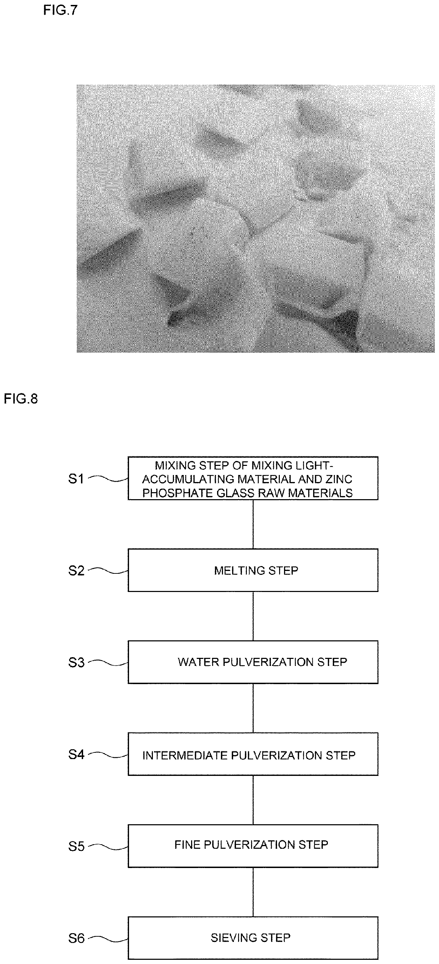

Similarly, Example 8 has an external appearance that is in a tablet form (flat plate shape) as shown in Fig. 7 (photograph), and the maximum diameter is 8 mm.

In Fig. 5, the horizontal axis represents the elapsed time (hours), and the vertical axis represents the value of emission luminance of the glass-coated light-accumulating material expressed as a logarithmic value.

Furthermore, in Fig. 5, line A corresponds to Example 7, and line B corresponds to Example 8.

Therefore, in regard to the emission luminance, as shown by the lines A and B, the emission luminance shows significantly high values (for example, 10,000 mcd/m² or higher) in the early stage.

In this regard, it is understood that as shown by the lines A and B, the emission luminance decreases with the lapse of time; however, the glass-coated light-accumulating material of line A maintains an emission luminance of 20 mcd/m² or higher for 8 hours or longer, and the glass-coated light-accumulating material of line B maintains an emission luminance of 100 mcd/m² or higher for 8 hours or longer.

Therefore, it is understood that when the amount of incorporation of the light-accumulating body is adjusted to a significant amount (for example, 50% by weight), and the light-accumulating body is produced into a tablet form having a predetermined size (for example, the maximum diameter is about 8 mm), the melt viscosity of the glass-coated light-accumulating material increases significantly; however, excellent luminescence properties are obtained for a long time period.

### 5. Surface hardness

In regard to the surface hardness of the glass-coated light-accumulating material, it is preferable that the surface hardness measured with a Vickers hardness meter (for example, manufactured by Akashi Seisakusho, Ltd., MVK-H1) is adjusted to a value of 600 kgf/mm² or less.

The reason for this is that such a Vickers hardness is equivalent to about 5 as Mohs' hardness; however, if the hardness increases excessively, the mixing apparatus for mixing with a resin may be damaged, uniform dispersing may be difficult, and polish waste of the mixing apparatus may be incorporated, resulting in blackening of the resin or the like in which the zinc phosphate glass is dispersed.

However, if such Vickers hardness is excessively small, the mechanical strength of the glass-coated light-accumulating material may be markedly decreased.

Therefore, it is more preferable to adjust the surface hardness of the glass-coated light-accumulating material to a value within the range of 10 to 500 kgf/mm², and even more preferably to a value within the range of 100 to 400 kgf/mm².

### 6. Form and the like

### (1) Form

Furthermore, the form of the glass-coated light-accumulating material is not particularly limited; however, for example, the form is preferably at least one of a spherical form, a particulate form, an ellipsoid form, a granular form, a flat plate form, a polyhedron (tetrahedron, a pentahedron, a hexahedron, an octahedron, a decahedron, a dodecahedron, a hexadecahedron, a dotriacontahedron, or the like), a polygonal prism, a cylinder, a heteromorphic form, and the like.

Furthermore, a composite produced by forming a glass-coated light-accumulating material-containing layer on a resin base material or a metal base material having a predetermined shape by applying or spraying the glass-coated light-accumulating material thereon, is also preferable.

### (2) Average particle size/maximum diameter

In regard to the average particle size of the glass-coated light-accumulating material, the average particle size may be determined as appropriate depending on the application; however, for example, in a case in which the glass-coated light-accumulating material is used as a mixture with a resin or the like, it is preferable that the average particle size is adjusted to a value within the range of 1 µm or more and below 500 µm.

The reason for this is that if the average particle size of the glass-coated light-accumulating material has a value of below 1 µm, it may be difficult for the glass-coated light-accumulating material to be uniformly dispersed in a resin or the like, or the luminescence characteristics may be partially deteriorated.

On the other hand, it is because if the average particle size of the glass-coated light-accumulating material is 500 µm or larger, similarly, it may be difficult for the glass-coated light-accumulating material to be uniformly dispersed in a resin or the like, or the luminescence characteristics may be partially deteriorated.

Therefore, in a case in which the glass-coated light-accumulating material is used as a mixture with a resin or the like, it is more preferable to adjust the average particle size of the glass-coated light-accumulating material to a value within the range of 10 to 250 µm, and even more preferably to a value within the range of 30 to 100 µm.

In a case in which the glass-coated light-accumulating material is sprayed directly to a predetermined place or used in a coating bag or the like, it is preferable to adjust the maximum diameter to a value within the range of 0.5 to 30 mm.

The reason for this is that if the average particle size of the glass-coated light-accumulating material has a value of below 0.5 mm, handling such as spraying may be difficult, or the luminescence characteristics may be partially deteriorated.

On the other hand, it is because if the average particle size of the glass-coated light-accumulating material is above 30 mm, similarly, handling such as spraying may be difficult, or the luminescence characteristics may be partially deteriorated.

Therefore, in a case in which the glass-coated light-accumulating material is sprayed directly or the like, it is more preferable to adjust the maximum diameter of the glass-coated light-accumulating material to a value within the range of 3 to 10 mm, and even more preferably to a value within the range of 5 to 8 mm.

The maximum diameter of the glass-coated light-accumulating material means the maximum length obtainable when an arbitrary line is drawn on the surface of the glass-coated light-accumulating material. That is, the maximum diameter of the glass-coated light-accumulating material is such that, for example, in a case in which the material has a flat plate shape, the maximum diameter is the maximum length in the planar direction, and in a case in which the material is granular, the maximum diameter is the maximum diameter of the grain.

### 7. Moisture adjusting layer

It is also preferable to form a silica layer or a metal layer as a moisture adjusting layer around the glass-coated light-accumulating material, or between the light-accumulating material and the glass coating material.

That is, it is preferable to form a polysilazane film or a silica film (including a silicating flame-treated film) having a thickness of 0.1 nm to 1,000 µm, or to provide a metal layer formed from aluminum, nickel or the like (including a vapor deposit layer or a plating layer) having the same thickness, as a moisture adjusting layer that exhibits a moisture-proof effect.

Particularly, if a polysilazane film or a silicating flame-treated film is used, even if the film is a thin film having a thickness of 0.1 nm to 100 nm, a value of low water vapor transmittance, for example, a value of 0.1 g/(m²·day) or less as the water vapor transmittance (WVTR) under the conditions of 40°C and 90%RH, is obtained. Therefore, the polysilazane film or a silicating frame-treated film is a suitable moisture adjusting layer.

In addition, it is also more preferable to perform a polyphosphate treatment or the like in advance before the formation of the moisture adjusting layer, for the purpose of enhancing the adhesive force between the light-accumulating material and the moisture adjusting layer, or the like.

### 8. Applications

The applications of the glass-coated light-accumulating material of the invention are not particularly limited, and the glass-coated light-accumulating material may be used as a part of the light-accumulating material by being sprayed on the road or the like, or may be mixed with an organic resin or an inorganic resin and used as a compositized light-accumulating material.

Particularly, the glass-coated light-accumulating material of the invention has excellent water resistance and luminescence characteristics, and also has an appropriate value of surface hardness. Therefore, there is expected a wide expansion of applications such as, for example, a paint for outdoor traffic signs, a road centerline-forming material, a crossing-forming material, and an outdoor indication mark-forming material.

To be more particular, it is also preferable that the glass-coated light-accumulating material is processed into a spherical shape, and the resultant is used as a substitute for glass beads for a retroreflective sheet.

### [Second embodiment]

A second embodiment relates to a method for producing a glass-coated light-accumulating material 14 that is formed by incorporating a metal aluminate salt as a light-accumulating material 10 into a glass component including a zinc phosphate glass 12 as a main component, in which a zinc phosphate glass 12 that includes P₂O₅, ZnO, and R₂O (wherein R = Na or K) as main components and has a melting point value within the range of 600°C to 900°C, is used as the glass component, while a metal aluminate salt is used as the light-accumulating material 10, and the method includes the following Steps (1) to (3):
(1) a step of heating a mixture including a metal aluminate salt and a zinc phosphate glass raw material to a temperature of 600°C to 900°C, and thereby obtaining a molten product;
(2) a step of cooling of the molten product thus obtained in water, while pulverizing the cooled molten product; and
(3) a step of classifying the pulverization product thus obtained, and obtaining a glass-coated light-accumulating material having a desired average particle size.

Hereinafter, the method for producing a glass-coated light-accumulating material will be specifically described by making reference to Fig. 8 (S1 to S6) as appropriate.

### 1. Step (1)

As illustrated in S1 of Fig. 8, Step (1) is a step of obtaining a mixture including a metal aluminate salt and a zinc phosphate glass raw material, and then as illustrated in S2 of Fig. 8, heating the mixture together to a temperature of 600°C to 900°C, and thereby obtaining a predetermined molten product.

That is, Step (1) is a step of accommodating 85% phosphoric acid and the like, which are zinc phosphate glass raw materials that become the sources of P₂O₅, ZnO and R₂O (wherein R = Na or K), and a metal aluminate salt as a light-accumulating material in a heat-resistant container, subsequently introducing the container into a heating furnace or an electric furnace, which has been maintained at a predetermined temperature (600°C to 900°C), for about 1 to 10 hours, and thereby obtaining a uniform molten product.

Before mixing with the zinc phosphate glass raw materials, it is preferable to apply a coating treatment using a silicon-containing compound, for example, a silane coupling agent, a silazane compound, silicon oxide, silicon nitride, a silicone oil, a silicone resin or the like, to the surface of the metal aluminate salt on the basis of a known lamination method such as a sputtering method, a CVD method, a plasma ion method, a plasma ion injection method, a vapor deposition method, a plating method, a printing method, or an immersion method.

The reason for this is that when a silicon compound-containing layer having a predetermined thickness (for example, 0.1 nm to 5 mm) is formed by applying a coating treatment as such, penetrability of moisture from the surroundings may be regulated, and hydrolysis during the production of the glass-coated light-accumulating material may be suppressed.

Therefore, even in a case in which fine pulverization or the like is performed depending on the formation of such a silicon compound-containing layer, a glass-coated light-accumulating material having relatively satisfactory water resistance and luminescence characteristics may be obtained.

For the same reason, it is preferable that an activating agent, for example, europium (Eu) or the like, is incorporated in an amount within the range 0.01% to 30% by weight, more preferably within the range of 0.1% to 10% by weight, and even more preferably within the range of 0.5% to 5% by weight, with respect to the total amount (100% by weight) of the fluorescent agent before mixing with the zinc phosphate glass raw materials.

### 2. Step (2)

Next, as illustrated in S3 of Fig. 8, Step (2) is a step of cooling the molten product thus obtained in water, and also pulverizing the molten product.

That is, Step (2) is a step of having water accommodated in a predetermined container, sequentially introducing the molten product into water, roughly pulverizing the molten product into a large size (for example, fragments having an average length of 10 mm or less), and thus obtaining a predetermined pulverization product.

### 3. Step (3)

Next, as illustrated in S6 of Fig. 8, Step (3) is a step of classifying the pulverization product thus obtained using a sieve or the like, and obtaining a glass-coated light-accumulating material having a desired average particle size.

More specifically, Step (3) is a step of cutting the pulverization product having a particle size of above 5 mm so as to obtaining a glass-coated light-accumulating material having an average particle size of 5 mm or less.

As illustrated in S4 or S5 of Fig. 8, before performing classification using a sieve or the like in Step (3), it is also preferable that the pulverization product obtained in Step (2) is further subjected to intermediate pulverization or fine pulverization using a pulverizing apparatus such as a ball mill or a mortar.

### 4. Step (4)

Furthermore, it is preferable that a surface treatment step, which is an optional step, is provided after Step (3), and a surface treatment using a silicon-containing compound, for example, a silane coupling agent, a silazane compound, silicon oxide, silicon nitride, a silicone oil or a silicone resin is applied to the surface of the glass-coated light-accumulating material thus obtained, on the basis of a known lamination method such as described above in Step (1).

The reason for this is that when a silicon compound-containing layer having a predetermined thickness (for example, 0.1 nm to 5 mm) is formed by applying a surface treatment as such, penetrability of moisture from the surroundings may be regulated, and even in a case such as a case in which the glass-coated light-accumulating material has been finely pulverized, hydrolysis or the like may be effectively suppressed.

Therefore, by forming such a silicon compound-containing layer, a glass-coated light-accumulating material which has relatively satisfactory water resistance and luminescence characteristics even if finely pulverized or the like, may be produced.

### EXAM PLES

Hereinafter, the invention will be described more specifically based on Examples. However, it is needless to say that the scope of the invention is not limited by the description of such Examples without any particular reasons.

### [Example 1]

### 1. Production of glass-coated light-accumulating material

The following Steps (1) to (3) were carried out in sequence, and a glass-coated light-accumulating material having a metal aluminate salt as a filler material, which is provided therearound with a coating material containing, as a main component, a zinc phosphate glass including P₂O₅, ZnO, and R₂O (wherein R = Na or K) and having a melting point at a predetermined temperature, was produced.

More specifically, a glass-coated light-accumulating material having a zinc phosphate glass composed of the following amounts of incorporation: 55% by weight of P₂O₅, 35% by weight of ZnO, 5% by weight of Na₂O, and 5% by weight of K₂O, as a coating material, was produced and evaluated.

### (1) Step (1)

Into a heat-resistant container, 100 parts by weight of a fluorescent body formed by mixing strontium aluminate (Sr₄Al₁₄O₂₅) coated with a silicon-containing compound (aminosilane coupling agent) having a predetermined thickness (about 1 µm), with europium (Eu) as an activating agent in a predetermined amount (1% by weight), and 900 parts by weight of a zinc phosphate glass raw material were introduced.

That is, the zinc phosphate glass raw material was incorporated such that the amount of incorporation of the fluorescent body would be 11.1 parts by weight (10% by weight) with respect to 100 parts by weight of the zinc phosphate glass.

Next, while the various raw materials were accommodated in the heat-resistant container, the heat-resistant container was introduced into an electric furnace under a weakly reductive gas stream composed of a mixed gas of nitrogen and hydrogen, and the raw materials were heated for 1 hour under the temperature conditions of 800°C. Thus, a molten product was obtained.

Before accommodating in the heat-resistant container, strontium carbonate as a special grade reagent: 0.94 mol and alumina: 1 mol were prepared, and to this, europium oxide as an activating agent: 0.005 mol and dysprosium as a co-activating agent: 0.025 mol were added. Furthermore, boric acid as a flux: 0.05 mol was further added thereto, and the raw materials were sufficiently mixed using a ball mill. Thus, granular strontium aluminate was obtained.

Subsequently, the granular strontium aluminate was coated with a silicon-containing compound (polysilazane film/PHPS), and thereby a moisture adjusting layer (thickness: 30 nm) for improving water resistance was formed (strontium aluminate coated with silicon-containing compound, in Table, TYP1).

### (2) Step (2)

Next, the molten product obtained in the heat-resistant container was rapidly cooled by introducing the molten product into water, and at the same time, the molten product was subjected to so-called water-pulverization. Thus, a pulverization product having an average particle size of about 10 mm was obtained.

### (3) Step (3)

Next, the pulverization product thus obtained was classified using a metal sieve, and thus, a glass-coated light-accumulating material having an average particle size of 0.4 mm was obtained.

### 2. Evaluation of glass-coated light-accumulating material

### (1) Evaluation 1: Emission luminance

Regarding the emission luminance (mcd/m²) of phosphorescent light, the emission luminance obtained immediately after completion of irradiation with solar light for 20 minutes (referred to as emission luminance 1), and the emission luminance after the lapse of a predetermined time from the completion of irradiation (at least 1 hour, 3 hours, or 5 hours) were measured using a photodetector disposed at a predetermined position in a 45°-direction above the sample.

### (2) Evaluation 2: Water resistance

1 g of a glass-coated light-accumulating material was introduced into a container accommodating 100 g of water, and in that state, the sample was left to stand for 168 hours.

Next, the glass-coated light-accumulating material was taken out from water and irradiated with solar light for 20 minutes. The emission luminance immediately after completion of such irradiation (referred to as emission luminance 2) was measured in the same manner as in Evaluation 1, and water resistance was evaluated according to the following criteria, based on the relation with the emission luminance 1.
⊙: Emission luminance 2/emission luminance 1 × 100 has a value of 90% or larger.
○: Emission luminance 2/emission luminance 1 × 100 has a value of 80% or larger.
Δ: Emission luminance 2/emission luminance 1 × 100 has a value of 60% or larger.
×: Emission luminance 2/emission luminance 1 × 100 has a value of below 60%.

### (3) Evaluation 3: Measurement of hydrogen ion concentration

It has been acknowledged that light-accumulating materials are generally easily hydrolyzed, the emission luminance decreases as a result of hydrolysis, and at that time, the hydrogen ion concentration increases.

Thus, 10 g of a glass-coated light-accumulating material was immersed in 100 ml of purified water, and the material was maintained for 20 days at 30°C. Subsequently, the hydrogen ion concentration (pH) was measured using a glass electrode type hydrogen ion concentration indicator (manufactured by Horiba, Ltd.), and the hydrogen ion concentration was evaluated according to the following criteria.
○: The pH has a value within the range of 4 to 7.
Δ: The pH has a value of within the range of above 7 and 9 or lower.
×: The pH has a value of above 9.

### (4) Evaluation 4: Surface hardness

The surface hardness of a glass-coated light-accumulating material was measured using a commercially available Vickers hardness meter (manufactured by Akashi Seisakusho, Ltd., MVK-H1) according to JIS Z 2244.
⊙: The surface hardness has a value within the range of 10 to 400 kgf/mm².
○: The surface hardness has a value within the range of above 400 to 500 kgf/mm².
Δ: The surface hardness has a value within the range of above 500 to 600 kgf/mm².
×: The surface hardness has a value of above 600 kgf/mm².

### [Example 2]

In Example 2, a glass-coated light-accumulating material was produced in the same manner as in Example 1, except that the zinc phosphate glass raw materials were mixed such that the amount of incorporation of the fluorescent body (strontium aluminate coated with silicon-containing compound; in the table, TYP1) would be 17.6 parts by weight (15% by weight) with respect to 100 parts by weight of the zinc phosphate glass, and the produced material was evaluated. The results thus obtained are presented in Table 1.

### [Example 3]

In Example 3, a glass-coated light-accumulating material was produced in the same manner as in Example 1, except that the zinc phosphate glass raw materials were mixed such that the amount of incorporation of the fluorescent body (strontium aluminate coated with silicon-containing compound; in the table, TYP1) would be 25 parts by weight (20% by weight of the total amount) with respect to 100 parts by weight of the zinc phosphate glass, and the produced material was evaluated. The results thus obtained are presented in Table 1.

### [Example 4]

In Example 4, a glass-coated light-accumulating material was produced in the same manner as in Example 1, except that strontium aluminate of a different composition (SrAl₂O₄; in the table, referred to as TYP2), which was not coated with a silicon-containing compound, was used instead of the strontium aluminate (Sr₄Al₁₄O₂₅) coated with a silicon-containing compound, and the amount of incorporation thereof was changed to 3 parts by weight, and the produced material was evaluated. The results thus obtained are presented in Table 1.

### [Example 5]

In Example 5, a glass-coated light-accumulating material was produced in the same manner as in Example 1, except that the zinc phosphate glass raw materials were mixed such that the amount of incorporation of the fluorescent body (strontium aluminate coated with silicon-containing compound; in the table, TYP1) would be 54 parts by weight (35% by weight of the total amount) with respect to 100 parts by weight of the zinc phosphate glass, and the produced material was evaluated. The results thus obtained are presented in Table 1.

### [Example 6]

In Example 6, a glass-coated light-accumulating material was produced in the same manner as in Example 1, except that the zinc phosphate glass raw materials were mixed such that the amount of incorporation of the fluorescent body (strontium aluminate coated with silicon-containing compound; in the table, TYP1) would be 100 parts by weight (40% by weight of the total amount) with respect to 100 parts by weight of the zinc phosphate glass, and the produced material was evaluated. The results thus obtained are presented in Table 1.

### [Example 7]

a glass-coated light-accumulating material was produced in the same manner as in Example 1, except that the zinc phosphate glass raw materials were mixed such that the amount of incorporation of the fluorescent body (strontium aluminate coated with silicon-containing compound; in the table, TYP1) would be 100 parts by weight (50% by weight of the total amount) with respect to 100 parts by weight of the zinc phosphate glass, and the produced material was evaluated. The results thus obtained are presented in Table 1.

### [Comparative Example 1]

In Comparative Example 1, a glass-coated light-accumulating material was produced in the same manner as in Example 1, except that a borosilicate glass comprising B₂O₃, SiO₂, Na₂O and the like was used instead of the coating material containing zinc phosphate glass as a main component, and the produced material was evaluated.

However, in Comparative Example 1, when the borosilicate glass was used, vitrification was impossible, and the glass-coated light-accumulating material could not be molded into a predetermined shape. Therefore, the predetermined evaluation could not be carried out.

### [Comparative Example 2]

In Comparative Example 2, a glass-coated light-accumulating material was produced in the same manner as in Example 1, except that a soda lime glass comprising SiO₂, Na₂O, CaO and the like was used instead of the coating material containing zinc phosphate glass as a main component, and the produced material was evaluated.

However, in Comparative Example 2, when the soda lime glass was used, vitrification was impossible, and the glass-coated light-accumulating material could not be molded into a predetermined shape. Therefore, the predetermined evaluation could not be carried out.

### [Comparative Example 3]

In Comparative Example 3, evaluation was carried out in the same manner as in Example 1, except that the light-accumulating material (strontium aluminate (Sr₄Al₁₄O₂₅) coated with a silicon-containing compound) was evaluated alone, without using a glass component as a coating material.

**[Table 1]**

| Table 1 | Fluorescent body (amount of incorporation)/glass type | Evaluation 1 | | | | Evaluation 2 | Evaluation 3 | Evaluation 4 |
|---|---|---|---|---|---|---|---|---|
| | | Initial | 1 hour | 2 hours | 3 hours | 168 hours | After 20 days | |
| Example 1 | TYP 1 (10 wt%)/zinc phosphate | 3428 | 22 | 10 | 8 | ⊙ | ○ | ⊙ |
| Example 2 | TYP 1 (15 wt%)/zinc phosphate type | 6280 | 55 | 28 | 15 | ⊙ | ○ | ⊙ |
| Example 3 | TYP 1 (20 wt%)/zinc phosphate | 9062 | 102 | 42 | 24 | ⊙ | ○ | ○ |
| Example 4 | TYP 2 (3 wt%)/zinc phosphate | Below 1000 | Below 10 | Below 5 | Below 5 | - | - | ⊙ |
| Example 5 | TYP 1 (35 wt%)/zinc phosphate | 9265 | 112 | 57 | 29 | ⊙ | ○ | ○ |
| Example 6 | TYP 1 (40 wt%)/zinc phosphate | 9578 | 120 | 60 | 30 | ⊙ | ○ | ○ |
| Example 7 | TYP 1 (50 wt%)/zinc phosphate | 10534 | 125 | 63 | 32 | ⊙ | ○ | ○ |
| Comparative Example 1 | TYP 1 (10 wt%)/borosilicate | - | - | - | - | - | - | × |
| Comparative Example 2 | TYP 1 (10 wt%)/soda lime | - | - | - | - | - | - | Δ |
| Comparative Example 3 | TYP 1 only | 4785 | 80 | 35 | 20 | × | × | × |

| | | | | | | | | |
|---|---|---|---|---|---|---|---|---|
| * The symbol "-" in Comparative Examples 1 and 2 means that since vitrification was impossible, and dispersion failure occurred, neither production nor evaluation of the material for measurement was possible. * Evaluation 1: Luminescence characteristics, Evaluation 2: water resistance, Evaluation 3: pH, Evaluation 4: Vickers hardness | | | | | | | | |

### [Example 8]

In Example 8, a glass-coated light-accumulating material was produced according to Example 7, except that a fluorescent body formed from a polysilazane film (PHPS) having a thickness of 30 nm (in the table, may be referred to as TYP1) was used as the silicon-containing compound at the surface of the light-accumulating material (strontium aluminate), and the material was produced into tablet form having a maximum diameter of 8 mm, and the produced material was evaluated. The results thus obtained are presented in Table 2.

It could be confirmed that only by making the shape into a tablet form having a predetermined size, satisfactory luminescence characteristics (150 mcd/m² or higher) was maintained for 8 hours or longer.

### [Example 9]

In Example 9, a glass-coated light-accumulating material was produced in the same manner as in Example 7, except that a fluorescent body formed from a silica film having a thickness of 10 µm (in the table, may be referred to as TYP3) was used as the silicon-containing compound at the surface of the light-accumulating material (strontium aluminate), and the produced material was evaluated. The results thus obtained are presented in Table 2.

It could be confirmed that only by forming such a silica film, satisfactory luminescence characteristics (150 mcd/m² or higher) was maintained for 8 hours or longer under the same luminescence conditions.

### [Table 2]

**Table 2**

| | Fluorescent body | Evaluation 1 | | | | Evaluation 2 | Evaluation 3 | Evaluation 4 |
|---|---|---|---|---|---|---|---|---|
| | | Initial | 1 hour | 2 hours | 3 hours | 168 hours | After 20 days | |
| Example 8 | TYP1 PHPS 30 nm · maximum diameter 8 mm | 11020 | 820 | 310 | 202 | ⊙ | ○ | ⊙ |
| Example 9 | TYP3 silica 10 µm · average particle size 0.4 mm | 10720 | 720 | 230 | 190 | ⊙ | ○ | ⊙ |

### [Example 10]

In Example 10, a glass-coated light-accumulating material was produced in Example 1, except that Ag₂O was incorporated in an amount of 1% by weight into the zinc phosphate glass (100% by weight), and finally antibacterial activity was imparted, and the produced material was evaluated. The results thus obtained are presented in Table 3, together with the results of Example 1.

20 g of the glass-coated light-accumulating material as an object of measurement was immersed in 1 liter of purified water (30°C, pH 6.5), and the glass-coated light-accumulating material was left to stand in a sealed system for 24 hours while the temperature was maintained. Subsequently, a silver ion eluate was filtered through a filter paper (5C), and the filtrate was used as a measurement sample. Subsequently, the silver ion concentration in the measurement sample was measured using an analytic instrument capable of measuring the silver ion concentration, such as a silver ion meter, an atomic absorption spectrophotometer, or an ICP-MS analyzer. Thus, the amount of silver ion elution (mg/(g·1 liter·24 Hrs·30°C) was calculated.

As a result, the amount of silver ion elution of the glass-coated light-accumulating material was 0.04 mg/(g·1 liter·24 Hrs·30°C).

### [Example 11]

In Example 11, a glass-coated light-accumulating material was produced in the same manner as in Example 1, except that Ag₂O was incorporated in an amount of 3% by weight into the zinc phosphate glass (100% by weight), and finally a glass-coated light-accumulating material exhibiting antibacterial activity was produced, and the produced material was evaluated. The results thus obtained are presented in Table 3.

Furthermore, the amount of silver ion elution of the glass-coated light-accumulating material was measured in the same manner as in Example 12, and the amount was 0.09 mg/(g·1 liter·24 Hrs·30°C).

### [Table 3]

**Table 3**

| | Antibacterial glass (Ag₂O) | Evaluation 1 | | | | Evaluation 2 | Evaluation 3 | Evaluation 4 |
|---|---|---|---|---|---|---|---|---|
| | | Initial | 1 hour | 2 hours | 3 hours | 168 hours | After 20 days | |
| Example 1 | Non-antibacterial glass (0 wt%) | 3428 | 22 | 10 | 8 | ⊙ | ○ | ⊙ |
| Example 10 | Antibacterial glass (1 wt%) | 3438 | 21 | 10 | 8 | ⊙ | ○ | ⊙ |
| Example 11 | Antibacterial glass (3 wt%) | 3445 | 23 | 11 | 9 | ⊙ | ○ | ⊙ |

### [Example 12]

In Example 12, stop lines for a road intersection were formed during nighttime (temperature: 25°C, humidity: 50%RH, weather: clear) according to a neat construction method using the glass-coated light-accumulating material obtained in Example 1, and the stop lines were evaluated.

That is, stop lines were formed according to a neat construction method using the glass-coated light-accumulating material thus obtained.

Regarding the binder resin, a methyl methacrylate (MMA)-based resin was used, and the amount of use was set to 1.5 kg per 1 m². The amount of use of the glass-coated light-accumulating material was set to 6 kg per 1 m².

In regard to the luminescence characteristics (phosphorescence emission characteristics) of the stop lines thus formed, the stop lines were irradiated with solar light for 20 minutes at about 3 o'clock in the afternoon, and then the stop lines were blocked from solar light for 5 hours. The emission luminance was measured at about 7 o'clock in the afternoon, and the results were evaluated.

As a result, it was confirmed that the stop lines formed using the glass-coated line-accumulating material showed an emission luminance of 10 mcd/m² or higher, and the stop lines exhibited satisfactory luminescence characteristics even in the state of actual use during nighttime.

### [Example 13]

In Example 13, similarly to Example 8, stop lines for a road intersection were actually formed during nighttime (temperature: 25°C, humidity: 90%RH, weather: drizzle) according to a neat construction method using the glass-coated light-accumulating material obtained in Example 1, and the stop lines were evaluated.

In regard to the luminescence characteristics (phosphorescence emission characteristics) of the stop lines thus formed, the stop lines were irradiated with solar light (substitute halogen light) for 20 minutes at about 3 o'clock in the afternoon, and then the stop lines were blocked from solar light for 5 hours. The emission luminance was measured at about 7 o'clock in the afternoon, and the results were evaluated.

As a result, it was confirmed that the stop lines formed using the glass-coated line-accumulating material showed an emission luminance of 5 mcd/m² or higher, and the stop lines exhibited satisfactory luminescence characteristics even in a rainy environment.

### INDUSTRIAL APPLICABILITY

As is obvious from the above description, according to the glass-coated light-accumulating material of the invention and the method for producing the same, by mixing and dispersing a zinc phosphate glass (glass raw material) with a light-accumulating material and heating the mixture directly to a predetermined temperature (600°C to 900°C), a glass-coated light-accumulating material formed by incorporating a metal aluminate salt as a light-accumulating material into a glass component including a zinc phosphate glass as a main component can be efficiently obtained.

Therefore, when the periphery is coated with a zinc phosphate glass, water resistance of the light-accumulating material may be enhanced, and also, the emission luminance or the duration of emission may also be enhanced compared to the case of the simple substance of the light-accumulating material.

Furthermore, even if immersed in water, the glass-coated light-accumulating material does not undergo any significant increasing change in the hydrogen ion concentration (pH value) caused by hydrolysis, and can be used stably for a long time period without affecting the luminescence characteristics.

In addition, since the hardness of the zinc phosphate glass may be adjusted to an appropriate range, the influence of hardness of the light-accumulating material may be mitigated, and the zinc phosphate glass and the light-accumulating material may be easily mixed and dispersed in a resin using various mixing apparatuses.

The glass-coated light-accumulating material may exhibit predetermined antibacterial activity without inhibiting the light-accumulating properties, by incorporating an antibacterial component such as Ag₂O into the zinc phosphate glass or the glass-coated light-accumulating material.

Therefore, when an antibacterial glass-coated light-accumulating material is used in stairs and balustrades in nursing care centers, public halls, or schools, or in some parts of electrical appliances and mobile telephones, visibility during nighttime or in dark spaces can be markedly enhanced, and also, the glass-coated light-accumulating material exhibits predetermined antibacterial activity, so that cleanliness can be maintained even in a case in which the glass-coated light-accumulating material is touched by a large number of people.

### EXPLANATIONS OF LETTERS OR NUMERALS

10: Light-accumulating material (metal aluminate salt)
12: Coating material (zinc phosphate glass)
14: Glass-coated light-accumulating material
16: Moisture adjusting layer

## Claims

1. A glass-coated light-accumulating material comprising a metal aluminate salt as a light-accumulating material incorporated into a glass component including a zinc phosphate glass as a main component,
wherein the zinc phosphate glass includes P₂O₅, ZnO, and R₂O (wherein R = Na or K) as main components, and
the melting point of the zinc phosphate glass is adjusted to a value within the range of 600°C to 900°C.

2. The glass-coated light-accumulating material according to claim 1, wherein the mixing composition of the zinc phosphate glass is such that the content of P₂O₅ has a value within the range of 40% to 60% by weight, the content of ZnO has a value within the range of 25% to 39% by weight, and the content of R₂O has a value within the range of 1% to 15% by weight, with respect to the total amount.

3. The glass-coated light-accumulating material according to claim 1 or 2, wherein the metal aluminate salt is in the form of particles of at least one light-accumulating material represented by formula: MO-nAl₂O₃ (wherein M represents at least one metal selected from the group consisting of magnesium, calcium, strontium, and barium).

4. The glass-coated light-accumulating material according to any one of claims 1 to 3, wherein the amount of incorporation of the metal aluminate salt is adjusted to a value within the range of 1 to 60 parts by weight with respect to 100 parts by weight of the zinc phosphate glass.

5. The glass-coated light-accumulating material according to any one of claims 1 to 4, wherein the overall shape is a particulate form, and the average particle size has a value within the range of 1 or more and below 500 µm.

6. The glass-coated light-accumulating material according to any one of claims 1 to 4, wherein the overall shape is a granular shape or a flat plate shape, and the maximum diameter has a value within the range of 0.5 to 30 mm.

7. The glass-coated light-accumulating material according to any one of claims 1 to 6, wherein a silicon compound-containing layer is provided as a moisture adjusting layer on the surface of the metal aluminate salt or on the surface of the glass-coated light-accumulating material.

8. A method for producing a glass-coated light-accumulating material comprising a metal aluminate salt as a light-accumulating material incorporated into a glass component including a zinc phosphate glass as a main component,
wherein a zinc phosphate glass including P₂O₅, ZnO, and R₂O (wherein R = Na or K) as main components and having a melting point value within the range of 600°C to 900°C is used as the glass component, a metal aluminate salt is used as the light-accumulating material, and
the method comprises the following Steps (1) to (3):
(1) a step of heating a mixture including the metal aluminate salt and the zinc phosphate glass raw materials to a temperature of 600°C to 900°C and thereby obtaining a molten product;
(2) a step of cooling the molten product thus obtained in water and also pulverizing the cooled molten product; and
(3) a step of classifying the pulverization product thus obtained and obtaining a glass-coated light-accumulating material having a desired average particle size.
